# EUROPÄISCHE PATENTANMELDUNG

(11) **EP 1 666 625 A1**
(43) Veröffentlichungstag der Anmeldung: **07.06.2006**
(21) Anmeldenummer: 04028484.6
(22) Anmeldetag: 01.12.2004
(51) Int. Cl.: C23C 4/08, C23C 4/12, C23C 16/18, C23C 16/453, C23C 16/455, C23C 22/72, C23C 30/00, F01D 5/28

(54) **Verfahren zur Beschichtung von Bauteilen im Inneren einer Vorrichtung**

(71) Anmelder: SIEMENS AKTIENGESELLSCHAFT, 80333 München (DE)
(72) Erfinder: Fischer, Marcus, 56589 Niederbreitbach (DE); Pfeiffer, Elmar, 52525 Heinsberg (DE)

(57) **Zusammenfassung**

Die Einzelkomponenten eines Rotors also einem Bauteil einer Vorrichtung werden nach dem Stand der Technik ausgebaut und einzeln beschichtet. Dies stellt einen zeitlichen Aufwand dar.

Mit dem erfindungsgemäßen Verfahren werden mehrere zu beschichtende Komponenten (120, 130) eines Rotors (10) auf einmal beschichtet, indem der Rotor (10) sich im eingebauten Zustand befindet und alle zu beschichtenden Komponenten (120, 130) aufweist, die dann mit dem Beschichtungsmaterial (13) versehen werden.

## Beschreibung

Die Erfindung betrifft ein Verfahren zur Beschichtung eines Bauteils gemäß Obergriff des Anspruchs 1.

Bauteile werden oft mit Schichten versehen, um eine gewisse Funktion, wie zum Beispiel Beständigkeit gegen Korrosion, Oxidation und/oder Wärme (Wärmedämmung) zu erreichen.
Dabei können die beschichteten Bauteile auch rotierende Bauteile sein wie beispielsweise Schaufeln eines Kompressors oder einer Turbine einer Gasturbinenanlage bekannt ist, die Schutzschichten gegen Erosion oder Wärme aufweisen.
Bei großen Maschinen setzt sich ein Rotor aus vielen Einzelteilen (mehrere Scheiben mit jeweils mehreren Turbinenschaufeln) zusammen, die einzeln oder gruppenweise beschichtet werden, sodass es lange dauert bis alle Einzelteile beschichtet sind.

Die JP 06 099 125 A offenbart eine Beschichtungsapparatur, bei der das Substrat unter Drehung beschichtet wird.

Die JP 06 219 762 A offenbart eine Beschichtungsmethode, bei der ein kreisförmiges Schneidwerkzeug, während es rotiert, beschichtet wird.

Die US 5,897,921 offenbart ein Verfahren zum Aufbringen einer Wärmedämmschicht.

Die US 6,585,569 B2 offenbart ein Verfahren zum Reinigen eines Kompressors einer Gasturbine, bei dem Trockeneis in die Turbine eingeführt wird.

Die US 6,180,262 offenbart ein Verfahren, bei dem mehrere, ausgebaute Turbinenschaufeln eines Rotors auf einmal beschichtet werden.

Es ist daher Aufgabe der Erfindung oben genanntes Problem zu überwinden.

Die Aufgabe wird gelöst durch ein Verfahren gemäß Anspruch 1.

In den Unteransprüchen sind weitere vorteilhafte Maßnahmen aufgelistet, die beliebig in vorteilhafter Art und Weise miteinander kombiniert werden können.
Die Servicezeiten einer Turbine werden durch das erfindungsgemäße Verfahren erheblich verkürzt, weil beispielsweise im Fall einer Gasturbine nicht abgewartet werden muss, bis die Turbine und das Turbinengehäuse abgekühlt sind bzw. es muss keine Zwangskühlung durchgeführt werden und weil die ganzen Zuleitungen und äußeren Gehäuseteile nicht entfernt werden müssen. Ebenso muss die Turbine nicht wieder zusammengebaut werden und angefahren werden. Dies bringt eine deutliche Reduzierung des Stillstandes und der damit verbundenen Ausfallzeit für den Betreiber einer Turbine und Wegfall von schweren Maschinen, die die Gehäuseteile anheben müssen.

Es zeigen
- Figur 1: eine schematische Darstellung des erfindungsgemäßen Verfahrens,
- Figur 2: eine Turbinenschaufel,
- Figur 3: eine Brennkammer,
- Figur 4: eine Gasturbine,
- Figur 5: eine Dampfturbine.

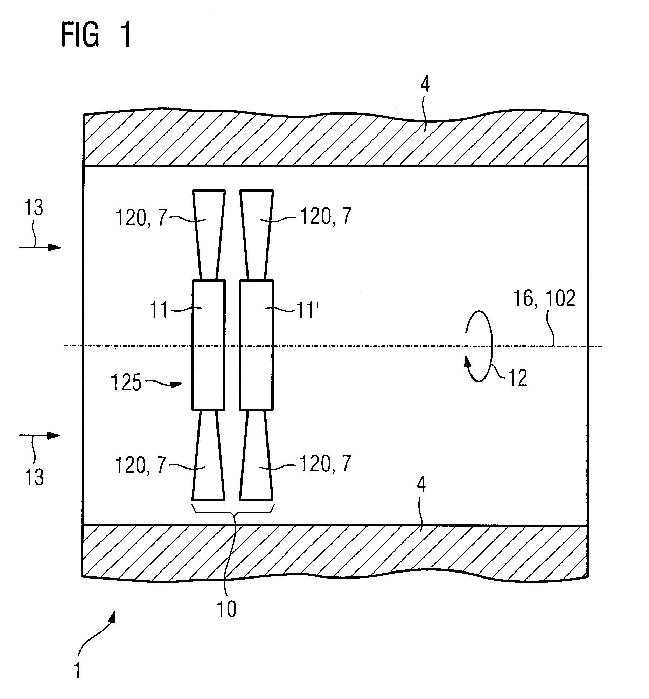

Figur 1 zeigt eine Vorrichtung 1, die eine Strömungsmaschine mit einem Rotor 10 aufweist.
Der Rotor 10 soll im Innern eines Gehäuses 4 beschichtet werden.
Die Figur 1 zeigt schematisch wie das erfindungsgemäße Verfahren durchzuführen ist, um den Rotor 10 zu beschichten.

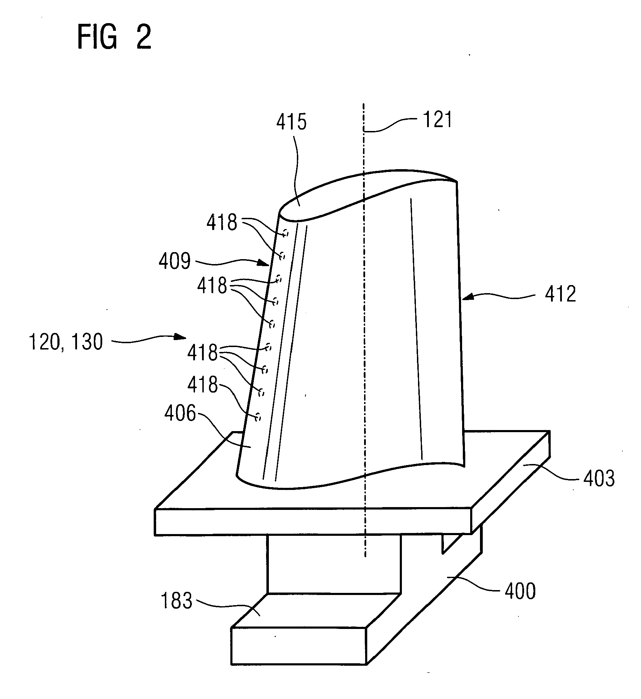

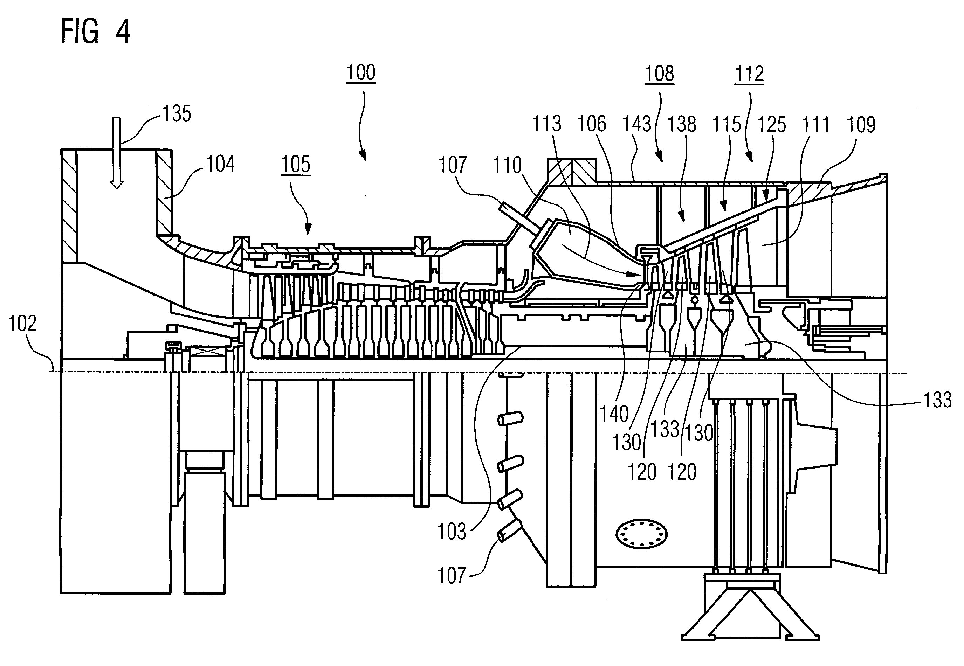

Der Rotor 10 besteht aus mehreren Teilen 7, 120. Im Falle eines Rotors 103 für eine Turbine 100, 300, 303 oder eines Kompressors 105 weist der Rotor 10, 103 beispielsweise zumindest eine Scheibe 11, 11', 133 (Fig. 4) auf, an der mehrere Turbinenschaufeln 120, 354 (Fig. 2, 4, 5) in radialer Ausrichtung über den Umfang verteilt angeordnet sind.
Der Rotor 10 kann aus mehreren Scheiben 11, 11' mit jeweils mehreren Turbinenschaufeln 120, 354 bestehen. Eine Reihe 125 besteht beispielsweise aus einer Scheibe 11, 133 (Fig. 4) mit Turbinenlaufschaufeln 120.

Der Rotor 10, 103 ist noch in seinem Gehäuse 4, 138 (Fig. 4) angeordnet und kann um eine drehbare Achse 16, 102 (Fig. 4) gedreht werden.
Das Gehäuse 4, 138 ist beispielsweise das Gehäuse einer Turbine 100, 300, 303 oder eines Kompressors 105, in der der Rotor 10, 103 betrieben wird.
Erfindungsgemäß wird Beschichtungsmaterial 13 aufgebracht, während also der Rotor 10, 103 noch eingebaut ist.

Während der Beschichtung kann sich der Rotor 10 auch um die Rotationsachse 16, 102 drehen.

Das Beschichtungsmaterial 13 kann gasförmig sein, wie es aus einer PVD- oder CVD-Anlage bekannt ist, und scheidet sich dann auf den Oberflächen der zu beschichtenden Teile 7, 120 ab.
Ebenso kann das Beschichtungsmaterial 13 in flüssiger Form, insbesondere fein verteilt in der Luft auf den Teilen 7 aufgebracht werden.
Beispielsweise kann auch ein Schlicker aufgebracht werden, der einen Binder und Pulverteilchen enthält, die dann die endgültige Schicht ergeben. In diesem Fall lässt man noch das Trägermittel verdampfen und den Binder ausbrennen, wenn das Beschichtungsmaterial 13 aufgebracht ist. Bspw. durch weitere Temperaturerhöhung werden dann die Pulverteilchen miteinander versintert, sodass sich eine feste Beschichtung ergibt. Die Temperaturerhöhung kann sich durch Beaufschlagen der Bauteile 7, 120 mit einer Flamme ergeben oder dadurch, dass beispielsweise durch die hohlen Turbinenschaufeln 120 ein Heißgas oder Wasserdampf durchgeführt wird, was zur Erwärmung des beschichteten Bauteils 7 führt.

Die Beschichtung des Rotors 10 kann auch während des Betriebs des Rotors durchgeführt werden. "Betrieb" bedeutet dabei, dass der Rotor 10 bestimmungsgemäß eingesetzt wird. Also der Rotor eines Kompressors verdichtet Luft, in dem Rotor einer Turbine entspannt sich ein Gas (Wasserdampf, Heißgas) und verrichtet Arbeit. Ist vom "Drehen" des Rotors die Rede, so bedeutet das nicht unbedingt, dass der Rotor in Betrieb ist. Der Rotor 10 ist dabei beispielsweise Teil eines Kompressors 105 beispielsweise einer Gasturbine 100, wobei der zu verdichtenden Luft das Beschichtungsmaterial als Additiv hinzugefügt wird.
Ebenso kann der Rotor 10 ein Rotor 103 einer Gasturbine 100 sein, wobei dem Heißgas im Betrieb während einer Leistungsabsenkung oder -anhebung der Gasturbine 100 das Beschichtungsmaterial 13 hinzugefügt wird, um die Lauf- 120 und/oder Leitschaufeln 130 des Rotors zu beschichten.

Weiterhin kann die Temperatur des Gases im Betrieb bewusst an die notwendigen thermischen Randbedingungen für den jeweiligen Beschichtungsprozess angepasst werden, indem mehr oder weniger Brennstoff verbrannt wird oder weniger verdichtete Luft aus dem Kompressor der Turbine zugeführt wird bzw. die Temperatur des Wasserdampfes reguliert wird.

Das Beschichtungsmaterial 13 kann ein Metallhalogenid (AlF₃, AlCl₃, CrF,....) enthalten, das in gasförmiger Form oder als Pulverteilchen vorhanden ist.

Ebenso können pulverförmige Teilchen 13 (z. B. Keramiken, Hartmetalle) auf die zu beschichtenden Bauteile 7, 120 aufgebracht werden, die sich dann auf dem oberflächennahen Bereich der Rotoren 10, 103 einbetten, wenn die Oberfläche oder eine Schicht, in der sich die Teilchen einbetten können, weich genug ist (beispielsweise durch Erhitzen). Dies sind zum Beispiel gröbere Teilchen, die beispielsweise den Erosionswiderstand des Bauteils 7, 120 erhöhen sollen.
Das Beschichtungsmaterial 13 kann beispielsweise metallisch (MCrAlX) oder glasartig sein (Kompressorschaufel).

Das erfindungsgemäße Schichtverfahren kann auch zur Reparatur von beschädigten Schaufeln des Kompressors 105 oder der Turbine 100, 300, 303 verwendet werden. Dabei kann das Material so ausgewählt werden, dass es sich vorzugsweise an den geschädigten Stellen niederschlägt.

Wenn der Rotor 10 ein Rotor 103 einer Gasturbine 100 ist, kann das Beschichtungsmaterial 13 beispielsweise mit dem Brennstoff in die Brennkammer 110 eingeführt werden und durch die Verbrennung des Brennstoffs kann sich das Beschichtungsmaterial 13 erwärmen, sodass es sich ähnlich wie beim Plasmaspritzen auf den Bauteilen 7, 120 abscheidet.

Ebenso können die Schaufeln eines Kompressors, insbesondere eines Kompressors 105 einer Turbine 100 beschichtet werden.

Beim Verdichten der Luft im Verdichter fällt Wasser aus, das in Verbindung mit anderen in der Luft enthaltenen Elementen einen Elektrolyt bilden kann, welcher zu Korrosion und Erosion an den Verdichterschaufeln führen kann. Um die Korrosion und Erosion zu verhindern, können Verdichterschaufeln mit Beschichtungen versehen werden. Eine derartige Beschichtung besteht beispielsweise aus einer Grundbeschichtung und einer Deckbeschichtung. Als Grundbeschichtung kommt insbesondere eine Beschichtung in Frage, die einen anorganischen Binder aus Chrom-Phosphatverbindungen umfasst und bspw. sphärische Aluminiumteilchen enthält. Derartige Beschichtungen sind in EP 0 142 418 B1 oder in EP 0 905 279 A1 offenbart, wobei die Schichtzusammensetzung und der Schichtaufbau dieser Patentschriften ein Teil der Offenbarung ist. Als Deckbeschichtung können beispielsweise Chrom-Phosphatverbindungen auf wässriger Basis mit inerten Füllstoffen und Farbpigmentierungen zur Anwendung kommen.

Ebenso kann mit derselben Vorgehensweise eine Innenbeschichtung einer Turbine 100 bzw. eines Kompressors 105 stattfinden. Die Turbine 100 besteht aus Leitschaufeln 130 und einem Rotor 103, der die Laufschaufeln 120 aufweist.
Das Beschichtungsmaterial 13 wird, wie oben beschrieben, in die Turbine 100 eingebracht, wobei sich das Beschichtungsmaterial 13 sowohl auf dem Rotor 103 als auch auf den Leitschaufeln 130 niederschlägt. Der Rotor 103 mit den Laufschaufeln 120 kann sich dabei auch drehen.
Ebenso können dabei Gehäuseteile 4, 138 und Schaufeln 120, 130 oder nur das Gehäuse 4, 138 beschichtet werden.
Dies geschieht durch kontrollierte Einstellung von Temperaturunterschieden von Gehäuse 4, 138 und Schaufeln 120, 130. Die hohlen Laufschaufeln 120 und die hohlen Leitschaufeln 130 verfügen über separate Zuführungen in ihren Hohlraum für ein Medium, sodass die Laufschaufeln 120 erhitzt werden können und die Leitschaufeln 130 nicht oder umgekehrt. Erst eine bestimmte erhöhte Temperatur stellt die geeigneten Wachstumsbedingungen für eine Schicht auf einem Substrat (Schaufeln) dar oder ermöglicht es, dass die Schicht von einem zu kalten Substrat nicht abplatzt.

Ebenso kann eine Brennkammer 110 ein Bauteil einer Vorrichtung 1, also einer Gasturbine 100 sein, die beschichtet werden soll. Auch hier wird das Beschichtungsmaterial von außen in die Brennkammer 110 zugeführt. Dies kann ebenso wie bei der Turbine während des Betriebs geschehen. Dabei kann das Beschichtungsmaterial über den Brenner 107 zugeführt werden, das sich dann auf den entsprechend "temperierten" Hitzeschildelementen 155 abscheidet.
Eine weitere Möglichkeit das Beschichtungsmaterial für die Beschichtung der Brennkammer oder der Turbine zuzuführen besteht darin, dass das Beschichtungsmaterial am Verdichteraustritt dem Strömungsmedium innerhalb der Turbine 100 zugegeben wird.

Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium (Si) und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 durch Löten oder Schweißen repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

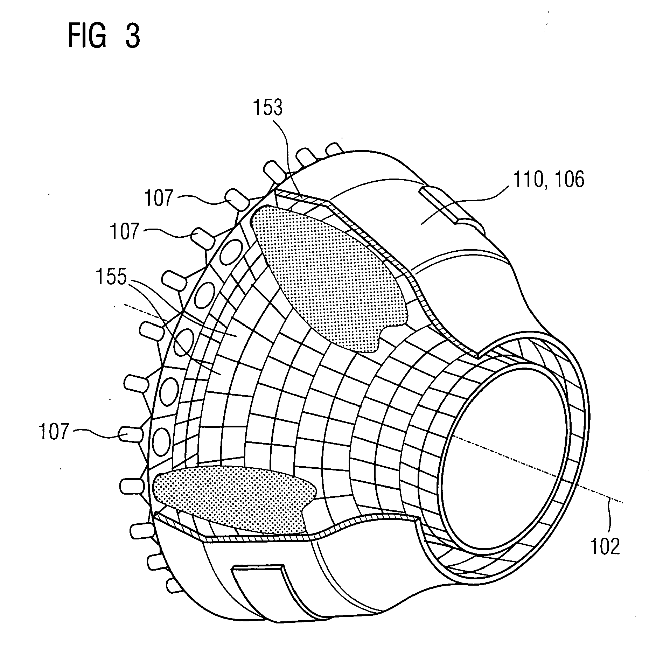

Die Figur 3 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein.
Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Figur 4 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.

Entlang des Rotors 103 folgen aufeinander ein Ansauggehäuse 104, ein Verdichter (Kompressor) 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂ Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

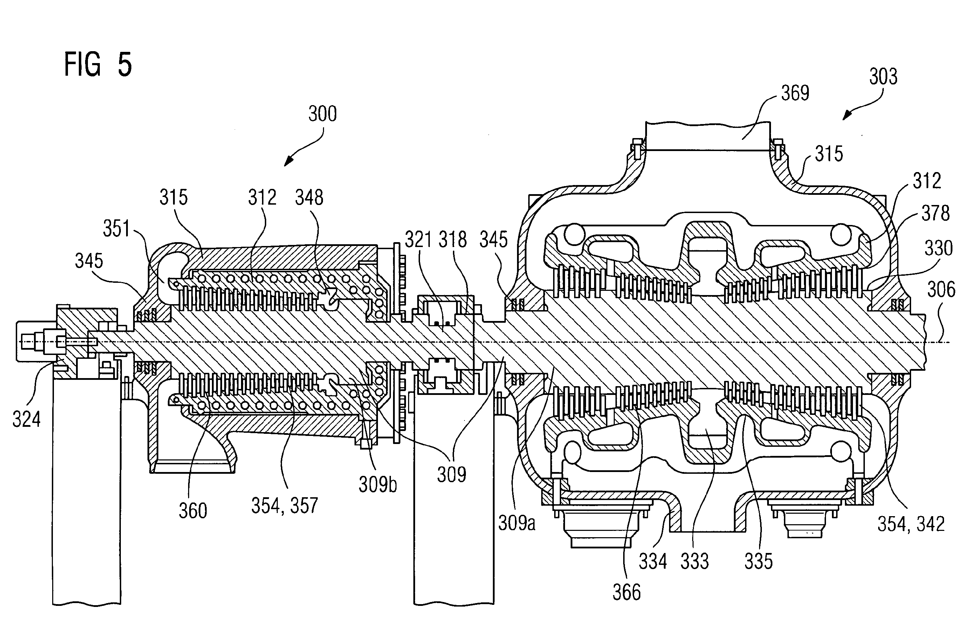

In Figur 5 ist beispielhaft eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließende Außengehäuse 315 auf.
Die Hochdruck-Teilturbine 300 ist beispielsweise in Topfbauart ausgeführt.
Die Mitteldruck-Teilturbine 303 ist zweiflutig ausgeführt.
Es ist ebenfalls möglich, dass die Mitteldruck-Teilturbine 303 einflutig ausgeführt ist.
Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinenwelle 309 in der Hochdruck-Teilturbine 300 die Hochdruck-Laufbeschaufelung 354, 357 auf. Diese Hochdruck-Laufbeschaufelung 354, 357 stellt mit den zugehörigen, nicht näher dargestellten Laufschaufeln einen ersten Beschaufelungsbereich 360 dar. Die Mitteldruck-Teilturbine 303 weist einen zentralen Dampfeinströmbereich 333 auf. Dem Dampfeinströmbereich 333 zugeordnet weist die Turbinenwelle 309 eine radialsymmetrische Wellenabschirmung, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354, 342 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

## Patentansprüche

1. Verfahren zur Beschichtung von zumindest einem Bauteil (10, 110, 120, 130, 155) einer Vorrichtung (1, 100, 300, 303),
die zumindest eine Strömungsmaschine aufweist,
die (1, 100, 300, 303) zumindest ein zu beschichtendes Bauteil (10, 110, 120, 130, 155) im Innern aufweist,
**dadurch gekennzeichnet,**
**dass** das Beschichtungsmaterial (13) in das Innere der Vorrichtung (1, 100, 100, 300, 303) eingeführt wird während sich das zumindest eine zu beschichtende Bauteil (10, 110, 120, 130, 155) im Innern der Vorrichtung (1, 100, 300, 303) befindet,
um im Inneren das Bauteil (10, 110, 120, 130, 155) zu beschichten.

2. Verfahren nach Anspruch 1,
**dadurch gekennzeichnet, dass**
das zu beschichtende Bauteil eine Brennkammer (110), insbesondere zumindest ein Hitzeschildelement (155) einer Gasturbine (100) ist.

3. Verfahren nach Anspruch 2,
**dadurch gekennzeichnet, dass**
das Beschichtungsmaterial (13) einem Verdichter einer Gasturbine (100) zugegeben wird,
damit es sich innerhalb der Brennkammer (110) abscheidet.

4. Verfahren nach Anspruch 1 oder 2,
**dadurch gekennzeichnet, dass**
das zu beschichtende Bauteil ein Rotor (10, 103) einer Turbine (100) ist,
der Laufschaufeln (120) aufweist,
wobei die Turbine (100) Leitschaufeln (130) aufweist, die ebenfalls beschichtet werden.

5. Verfahren nach Anspruch 1 oder 4,
**dadurch gekennzeichnet, dass**
das zu beschichtende Bauteil ein Rotor (10, 103) ist, der sich während der Beschichtung dreht.

6. Verfahren nach Anspruch 4 oder 5,
**dadurch gekennzeichnet, dass**
der Rotor (10, 103) während seines bestimmungsgemäßen Betriebs beschichtet wird.

7. Verfahren nach Anspruch 1 oder 3,
**dadurch gekennzeichnet, dass**
das Beschichtungsmaterial (13) zumindest teilweise, insbesondere vollständig gasförmig ist.

8. Verfahren nach Anspruch 1, 3 oder 7,
**dadurch gekennzeichnet, dass**
das Beschichtungsmaterial (13) zumindest teilweise, insbesondere vollständig flüssig ist.

9. Verfahren nach Anspruch 1, 3, 7 oder 8,
**dadurch gekennzeichnet, dass**
das Beschichtungsmaterial (13) zumindest teilweise, insbesondere vollständig pulverförmig ist.

10. Verfahren nach Anspruch 1, 3, 7, 8 oder 9,
**dadurch gekennzeichnet, dass**
das Beschichtungsmaterial (13) einen Binder aufweist, der vor oder während des Betriebs der Vorrichtung (1, 100, 300, 303),
insbesondere eines Rotors (10, 103) ausgebrannt wird.

11. Verfahren nach Anspruch 1, 3, 7, 8, 9 oder 10,
**dadurch gekennzeichnet, dass**
das Beschichtungsmaterial (13) ein Metallhalogenid enthält.

12. Verfahren nach einem oder mehreren der Ansprüche 4 - 11,
**dadurch gekennzeichnet, dass**
der Rotor (10, 103) während der Beschichtung zumindest teilweise erhitzt wird.

13. Verfahren nach einem oder mehreren der Ansprüche 1 - 12,
**dadurch gekennzeichnet, dass**
das Beschichtungsmaterial (13) erhitzt wird.

14. Verfahren nach Anspruch 4,
**dadurch gekennzeichnet, dass**
der Rotor (10, 103) ein Rotor einer Turbine,
insbesondere einer Dampf (300, 303)- oder Gasturbine (100) oder eines Kompressors (105) ist.

15. Verfahren nach Anspruch 1, 2, 4, 11, 12 oder 13,
**dadurch gekennzeichnet, dass**
das Beschichtungsmaterial (13) durch eine Brennkammer (110) dem zu beschichtenden Bauteil (10, 103, 110, 120, 130, 155) zugeführt wird.

16. Verfahren nach Anspruch 15,
**dadurch gekennzeichnet, dass**
das Beschichtungsmaterial (13) mit einem Brennstoff in die Brennkammer (110) eingeführt wird, wobei der Brennstoff verbrannt wird.

17. Verfahren nach Anspruch 4,
**dadurch gekennzeichnet, dass**
das Verfahren zur Reparaturbeschichtung eines Rotors (10, 103) verwendet wird.

18. Verfahren nach Anspruch 17,
**dadurch gekennzeichnet, dass**
das Beschichtungsmaterial (13) für die Beschichtung so ausgewählt ist,
dass es sich vorzugsweise auf die beschädigten Bereiche des Rotors (10, 103) abscheidet.

19. Verfahren nach Anspruch 1 oder 4,
**dadurch gekennzeichnet, dass**
ein Rotor (10, 103) mehrere hintereinander angeordnete Reihen (125) aufweist,
wobei jede Reihe (125) mehrere Turbinenschaufeln (120) aufweist,
die beschichtet werden.

20. Verfahren nach Anspruch 1,
**dadurch gekennzeichnet, dass**
auch das Gehäuse (4, 138) einer Turbine (100) beschichtet wird.
